# NEW EUROPEAN PATENT SPECIFICATION

(11) **EP 2 326 187 B2**
(45) Date of publication and mention of the opposition decision: **12.06.2024**
(45) Mention of the grant of the patent: 24.04.2019
(21) Application number: 09748165.9
(22) Date of filing: 12.08.2009
(51) Int. Cl.: A23G 4/06, A23G 3/36

(54) **CONFECTIONERY PRODUCTS PROVIDING AN INCREASED HYDRATION SENSATION**
KONFEKTPRODUKTE, DIE EIN VERSTÄRKTES FEUCHTIGKEITSGEFÜHL VERMITTELN
PRODUITS DE CONFISERIE FOURNISSANT UNE SENSATION ACCRUE D'HYDRATATION

(30) Priority: 14.08.2008 US 88943 P; 30.12.2008 US 141447 P
(43) Date of publication of application: 01.06.2011
(73) Proprietor: Wm. Wrigley Jr. Company, Chicago, IL 60642 (US)
(72) Inventor: PHILLIPS, David R., Downers Grove, IL 60516 (US); CHIN, Caren, Park Ridge, IL 60068 (US); TACKETT, April J., Chicago, Illinois 60661 (US); PETIT, Marcia, Chicago Illinois 60619 (US); HSU, April, Glenview, IL 60026 (US); KOZIEL, Thomas Richard, Lemont Illinois 60439 (US); ALLANSON, Ann, Chicago, IL 60622 (US); BARKALOW, David G., Deerfield Illinois 60015 (US)
(74) Representative: Greaves Brewster LLP
(86) International application number: PCT/US2009/053581
(87) International publication number: WO 2010/019689

(56) References cited:
- EP-A1- 0 430 663
- EP-A1- 0 430 663
- EP-A1- 0 758 528
- EP-A1- 0 758 528
- EP-A1- 1 223 175
- WO-A1-98/15192
- US-A- 4 588 592
- US-A1- 2003 008 062
- US-A1- 2004 180 110
- US-A1- 2006 263 476
- US-A1- 2008 063 747

## Description

### BACKGROUND

The present invention relates to confectionery products. More particularly, the present invention relates to chewing gum products which provide a hydration or mouthwatering sensation to a consumer.

Consumers have expressed a desire for a confectionary product such as a chewing gum or candy, which produces a mouthwatering or hydration sensation during consumption of such confectionary product. Confectionary products have been described as increasing salivation or treating xerostomia (a medical term describing dry mouth due to lack of salivation) which include ingredients such as acids or xylitol. However, consumers seek more satisfying confectionary product than are provided by products containing such ingredients.

Confectionery products such as chewing gum are popular among consumers. Typically, a chewing gum contains a water-insoluble elastomeric chewing gum base and a water-soluble bulking agent such as a sugar or sugar alcohol, combined with various flavoring agents. Typically, a sweetener component is incorporated into a chewing gum as a sugar (such as sucrose) or a high intensity sweetener. Some of these sweeteners and flavoring agents may cause some consumers to experience a mouth drying sensation and may cause the consumer to feel a need to drink water or a water-containing liquid. In addition, many individuals suffer from a dry mouth from time to time due to a variety of physiological and environmental factors such as when exercising or when in a dry climate. Therefore, there is a need for confectionery products that provide an increased hydration sensation to a consumer upon consumption to alleviate sensations of dry mouth experienced by the consumer.

Chewing gum confectionary products have been described which contain sugar alcohols such as sorbitol, mannitol, xylitol, maltitol, and erythritol. However, as described in this invention, incorporation of granular erythritol alone or in combination with other components provides a confectionary product, which produces a superior hydration or mouthwatering effect to a consumer upon consumption.

EP 0430663 A1 describes chewing gum composition which contains as sweetening agent a mixture of erythritol and a liquid sugar or liquid sugar alcohol other than erythritol, the amount of erythritol in the mixture being more than 60 weight %.

US 2004/0180110 A1 describes edible compositions comprising an endothermic agent in combination with a physiologically acceptable carrier, wherein the endothermic agent is present in a manner imparting a temperature cooling effect to the oral cavity of the consumer.

In aspects of this invention, an effective mouthwatering perception is produced using coarse erythritol granules and in other aspects an enhanced mouthwatering perception is produced by combining erythritol granules with components such as filled beads or food-grade acids.

### SUMMARY OF INVENTION

The present invention provides a chewing gum comprising a gum base, bulking agent and flavor component in which the bulking agent comprises a blend of granules consisting of erythritol, said blend comprising 50 to 99 wt% of coarse granules which are retained on a sieve of 250 microns, said granules of erythritol forming up to 80 wt% of the chewing gum and wherein the chewing gum comprises 20 wt% of the coarse erythritol granules.

### DESCRIPTION OF EMBODIMENTS

Consumers of confectionary products such as chewing gum have expressed a desire in consumer tests for a product which produces a fresh clean mouth feeling which is connected to a perceived sense of hydration. Such a hydration sensation refers to a mouthwatering or mouth moistening effect from a sense of increased salvation or moisture content in a consumer's mouth. This hydration or mouthwatering sensation is distinct and distinguishable from a "cooling" sensation caused by known cooling agents such as menthol. Such a mouthwatering sensation is not designed as a treatment for a medical condition known as xerostemia.

Although chewing gums of this invention do not supply significant quantities of water or liquid to a consumer, consumers have reported through sensory tests that chewing gums including granular erythritol, alone or in combination with other components, produce a pleasing sensation of mouth hydration. Particularly, consumer tests have determined that inclusion of larger erythritol granules in a confectionary product containing acid, such as a chewing gum, produces a hydration or mouthwatering effect greater than that with erythritol in smaller granules. Further, a mouthwatering sensation may be produced using a portion of smaller erythritol granules without an undue sense of crunchiness caused by large erythritol granules in the chewing gum.

Further, coarse erythritol granules, fine erythritol granules, or blends of coarse and fine erythritol granules having specific particle sizes and/or in combination with filled beads provide a sensation of hydration that consumers like over confectionery products lacking such blends of erythritol granules. A mouthwatering effect of the erythritol granules also can be created using smaller erythritol granules without an undue sense of crunchiness in the chewing gum.

An improved hydration sensation may arise from a fresh clean mouth feeling while chewing and after having completed chewing such a chewing gum. After chewing or consumption of a product of this invention, many consumers do not feel a need to rinse their mouth or take a drink of water. In contrast, too much flavor or too intense flavor may make a consumer want to rinse their mouth or take a drink. Thus, there is a detriment to having too much flavor component in a confectionery product such as chewing gum.

The confectionery products of the present invention are chewing gums. Other food products in the form of jelly candies, pressed tablets, mints, chewy candies, hard boiled candies, chocolates, nougats, licorice, taffy, gels, solid foam, crystallized pastes, or combinations thereof are disclosed. Other confectionery products not forming part of the invention also may include non-traditional confectionery products including food products such as granola bars, energy/sports bars, fruit leathers, and the like.

In an aspect of this invention, the chewing gum is in a form of pellets, sticks, tabs, dragees, chicklets, batons, molded shapes or combinations thereof.

In further aspects of this invention, the chewing gum may include one or more additional ingredients such as malted products, sweeteners, flavors, colors, medicaments, actives, or combinations thereof.

In the chewing gum of the invention, the chewing gum comprises a blend of coarse erythritol granules and fine erythritol granules. In addition to the sensation of hydration or mouthwatering, an erythritol blend may also provide crunchiness to the chewing gum depending on the distribution of the coarse erythritol and fine erythritol in the blend.

In accordance with this invention, erythritol granules are incorporated into chewing gums (as used and defined herein) alone or in combination with other components to produce a hydration sensation. Such erythritol granules are present in the invention in sufficient quantity to produce a hydration or mouthwatering effect as determined by consumer tests. A "mouthwatering effective amount" of erythritol is an amount of erythritol required to produce a mouthwatering or mouth moistening sensation to a consumer and preferably to a majority of consumers.

In the invention, coarse erythritol granules are incorporated into chewing gums to produce a mouthwatering effect to consumers. In such aspect, a large granule size (or "coarse") erythritol may be included in combination with less expensive bulking agents such as sorbitol, mannitol, xylitol, maltitol, and the like to produce an effective mouthwatering perception to a consumer.

As with many powdered materials, "coarseness" or "fineness" is described by the percentage of materials within a specific granular or particle size. The amount of a sample which is a particular particle size is identified by passing the powder sample through a series of screens. The smaller particles pass through the screen and the large particles are retained by or trapped on the screen.

As used here, the term "coarse erythritol granules" means erythritol crystalline granules are those that will not pass through a #60 ASTM E11 Series Sieve (i.e., a particle size not less than 250µm). For example, a coarse erythritol has a particle size greater than about 250 µm including for example greater than 275 µm, 300 µm, 325 µm, 350 µm, 375 µm, 400 µm, 425 µm, 450 µm, 475 µm, 500 µm, 525 µm, 550 µm, 575 µm, 600 µm, 625 µm, 650 µm, 675 µm, 700 µm, 725 µm, 750 µm, 775 µm, 800 µm, 825 µm, 850 µm and the like. In another embodiment, the coarse erythritol also can have a maximum particle size such as, for example, 900 µm, 1000 µm, 1100 µm, 1200 µm, 1300 µm, 1400 µm, 1500 µm and the like. In practice erythritol granules sold as "coarse" may contain some small crystals, although typically at least 80% of such coarse erythritol particles are at least 250 µm. Preferably, at least 40% of such coarse erythritol granules are at least 354 µm. Table 1 illustrates a typical particle size distribution for erythritol granules sold as "coarse."

**Table 1: Coarse Erythritol- Particle Size Distribution**

| Particle size ASTM E11 Sieves | Requirement | | | |
|---|---|---|---|---|
| | Min. | Target | Max. | Units |
| Retained on #20 (> 841µm) | 0 | 15 | 30 | % |
| Retained on #45 (354 µm - 841 µm) | 50 | 75 | 100 | % |
| Retained on #60 (250 µm - 354 µm) | 80 | 90 | 100 | % |

As used here, the term "fine erythritol granules" means erythritol crystalline granules that pass through a #80 ASTM E11 Series Sieve (i.e., a particle size not more than 177µm). In practice, erythritol granules sold as "fine" may include up 15% larger particles. Preferably, at least 75% of fine erythritol particles are no more than 53 µm. Table 2 illustrates a typical particle size distribution for erythritol granules sold as "fine."

**Table 2: Fine Erythritol - Particle Size Distribution**

| Particle size ASTM E11 Sieves | Requirement | | | |
|---|---|---|---|---|
| | Min. | Target | Max. | Units |
| Retained on #80 (> 177µm) | 0 | - | 10 | % |
| Retained on #270 (53 µm - 177 µm) | 0 | - | 20 | % |
| Retained on #450 (25 µm - 53 µm) | 10 | - | 45 | % |

The erythritol blend is in an amount ranging up to 80% by weight of the chewing gum. The chewing gum may contain an amount of the erythritol blend ranging up to 80%, including 25%, 30%, 35%, 40%, 45%, 50%, 55%, 60%, 65%, 70%, 75%, and the like, by weight of the chewing gum.

In an embodiment, the erythritol blend comprises 50% coarse erythritol and 50% fine erythritol. The coarse erythritol ranges from 50% to 99% by weight of the erythritol blend. For example, the erythritol blend can comprise an amount of coarse erythritol ranging from about 50% to about 99%, such as 55%, 60%, 65%, 70%, 75%, 80%, 85%, 90%, 95% and the like, by weight of the erythritol blend. A typical 50:50 blend of coarse and fine erythritol granules as sold contains at least about 40% and more typically at least about 45% coarse erythritol granules.

In an embodiment, the chewing gum comprises a food grade acid (i.e. an acidic compound acceptable as a food component) typically ranging from about 0.1% to about 5% by weight (preferably 1 to 4 wt.%) of the chewing gum. In this embodiment, the acid can add to or enhance the hydration sensation of the erythritol. Suitable food grade acids include, but are not limited to: citric, malic, lactic, ascorbic, tartaric, adipic, acetic, and fumaric acids.

In another embodiment, a chewing gum does not include an acid. As a result, the sensation of hydration comes from a combination of erythritol and filled beads or specific erythritol granules in suitable amounts.

In an aspect of this invention, a chewing gum contains an amount of coarse erythritol granules to produce a mouthwatering perception to many consumers (a "mouthwatering effective amount"). Such a mouthwatering effective amount of coarse erythritol granules is at least 20 wt.%, of a chewing gum. The amount of such coarse erythritol granules typically may range up to 80 wt.%, more typically up to 70 wt.%, and preferably up to 60 wt.% of a chewing gum.

The amount of coarse erythritol granules in a chewing gum of this invention typically is at least 80 wt.% (preferably at least 90%) of the total erythritol granules contained in the chewing gum. In other aspects of this invention, the amount of coarse erythritol granules in a chewing gum of this invention typically is at least 25 wt.% (preferably at least 40 wt.%) of the total erythritol granules contained in the chewing gum.

In an aspect of this invention in which coarse erythritol granules are combined with other bulking agents (such as other sugar alcohols), an amount of such coarse erythritol granules is at least 20 wt.%. Such other bulking agents or sugar alcohols are present in typical amounts of up to 25 wt.%, more typically up to 50 wt.%, and may range up to 70 wt.% of the chewing gum. Typical combinations of coarse erythritol granules and other bulking agent or sugar alcohols is up to 25 wt% coarse erythritol granules and 15 to 60 wt.% of other bulking agents such as other sugar alcohols.

In another aspect of this invention, a chewing gum contains an effective mouthwatering amount of erythritol granules (such as coarse, or a combination of fine and coarse erythritol granules) of at least 40 wt.% and preferably at least 50 wt.% of the chewing gum.

Also disclosed herein is a method of making a confectionery product that delivers a sensation of hydration. The method comprises combining the confectionery product with erythritol ranging up to about 80 wt.% and an amount of filled beads ranging from about 0.1% to about 5.0 wt.% of the confectionery product. The erythritol and the filled beads can be combined with the confectionery product using any suitable process.

Also disclosed herein is a method of making a confectionery product which delivers a sensation of hydration. In such method a confectionery product is combined with an erythritol blend of coarse erythritol and fine erythritol. The erythritol blend can be combined with the confectionery product using any suitable process and at any suitable stage of the confectionery manufacturing process.

An additional aspect of this invention is a chewing gum which incorporates filled beads in an amount sufficient to provide a hydration or mouthwatering sensation in a consumer's mouth. A preferred chewing gum of this invention is a chewing gum having a combination of erythritol granules and filled beads. Such a chewing gum contains erythritol ranging up to about 80 wt.% and an amount of filled beads ranging from about 0.1% to about 5.0 wt.% of the chewing gum. Such erythritol granules are coarse.

A chewing gum of this invention may contain at least one sensate. In an another aspect of this invention, a filled beads range from about 0.1% to about to about 5.0 wt.% of the chewing gum and the sensate ranges from about 0.01% to about 5 wt.% of the chewing gum.

A chewing gum of this invention containing flavor beads may contain an amount of an erythritol blend (e.g. of the coarse erythritol and fine erythritol) of up to 80%, including 25%, 30%, 35%, 40%, 45%, 50%, 55%, 60%, 65%, 70%, 75 % and the like, by weight of the chewing gum. In a preferred embodiment, the erythritol granules range up to about 60 wt.% of the chewing gum. In another preferred embodiment, the erythritol ranges up to about 30 wt.% of the chewing gum. In another preferred embodiment, the erythritol is about 20 wt.% of the chewing gum. In another preferred aspect, erythritol granules are used with other sugar alcohol bulking agents in weight ratios of 1:10 to 10:1, preferably 1:5 to 1:1.

Filled beads (sometimes called "flavor beads") contain a liquid center, or core, which could include one or more flavors, and a polymer-containing shell encapsulating the liquid core. The core and/or shell of the bead may or may not contain a flavor or sensate component. Specific features of suitable beads, such as bead size and shell composition or thickness, typically depend on the intended application. For example, a bead may be designed to provide a relatively quick burst of flavor or may be designed to provide a more sustained flavor release, by controlling such features as shell thickness or composition.

Hydrophilic polymers suitable for use as a shell material for the flavor beads includes, for example, gelatin, agar, alginate, carrageenan, pectin, gellan gum, and combinations thereof.

The preferred beads in this invention contain a liquid core and a water soluble protein or hydrocolloid shell. Most preferred, is a bead with a gelatin shell. The shell dissolves in the mouth during mastication, producing a potentially slippery and moist mouthfeel. The preferred shell thickness is such that the beads are easily broken during mastication, releasing their liquid contents. If the beads contain a sensate or a flavor, the content level will not be so high as to create a lingering intense flavor. Consumer studies have shown that intensely flavored products cause a consumer to want to rinse their mouth.

A suitable core material typically is in a form of a water or oil based liquid mixture which may or may not contain a flavor or sensate. Irrespective of the precise method used to prepare a filled bead, liquid flavors suitable for use in accordance with the present disclosure include, for example, fruit flavors, mint flavors, spice flavors, and combinations of such flavors. These flavors may be natural or artificial (synthetic) in origin and often natural and artificial flavors are combined. Also a blend of different flavors together in consumer-pleasing combinations may be used. Although the range of flavors is nearly limitless, flavors commonly fall into several broad categories. Fruit flavors include lemon, orange, lime, grapefruit, tangerine, strawberry, apple, cherry, raspberry, blackberry, blueberry, banana, pineapple, cantaloupe, muskmelon, watermelon, grape, currant, mango, kiwi and many others as well as combinations. Mint flavors include spearmint, peppermint, wintergreen, basil, corn mint, menthol and others and mixtures thereof. Spice flavors include cinnamon, vanilla, clove, chocolate, nutmeg, coffee, licorice, eucalyptus, ginger, cardamom, anise, and many others. Flavor beads useful in this invention also may include sensates to enhance the flavor or perceived breath freshening of the product or to provide additional consumer perceptions.

A mixture of core material useful in filled beads suitable in this invention also may include additional components such as a colorant, a solvent or diluent such as an edible oil (e.g., a medium chain triglyceride, soybean oil, olive oil, canola oil, or sunflower seed oil), and/or combinations thereof.

Diameters of suitable flavor beads useful in this invention also may vary depending on the intended application. Generally, an average bead diameter (for a population of beads) is less than 4000 µm (e.g., less than about 3500 µm, 3000 µm, 2500 µm, 2000 µm, 1500 µm, or even 1000 µm), as determined using sampling and measuring techniques known in the art. Also generally, a flavor bead useful in this invention has an average bead diameter greater than 1µm, more typically greater than 10µm, and usually greater than 100µm. Typically, the average diameter of the beads may in some embodiments range from about 1 µm to about 5000 µm, from about 250 µm to about 3500 µm, or from about 300 µm to about 3000 µm. In embodiments in which the flavor beads are incorporated into a chewing gum, the average diameter of the beads may be at or near the lower end of these ranges (e.g., about 200 µm to about 2000 µm, from about 500 µm to about 1500 µm, from about 800 µm to about 1200 µm, or about 1000 µm).

Chewing gums of this invention typically contain one or more additional ingredients such, for example, malted products, flavors, sensates, colors (e.g. azo free colors), sweetener, actives and medicaments (e.g. listed below). Such ingredients can be added in a free form or may be part of an encapsulation, compaction, granulation and agglomeration to provide, for example, protected and longer-lasting ingredient components such as flavors and sensates.

Sugar sweeteners may be added to the confection. Sugar sweeteners generally include saccharide-containing components commonly known in the confectionery art, including, but not limited to, sucrose, dextrose, maltose, dried invert sugar, fructose, levulose, tagatose, galactose, corn syrup solids, and the like, alone or in combination. Alternatively, sweeteners may include glycerin, fruit concentrates and fruit pastes.

Besides erythritol, various polyols may be used as a sugarless sweetener. These polyols can include, but are not limited to, other sugar alcohols such as xylitol, sorbitol, mannitol, isomalt, lactitol, hydrogenated starch hydrolysates, and the like, alone or in combination.

High intensity artificial or natural sweeteners also may be used alone or in combination with other sweeteners. Preferred high intensity sweeteners include, but are not limited to, sucralose, neotame, aspartame, salts of acesulfame, alitame, saccharin and its salts, cyclamic acid and its salts, stevioside, glycyrrhizin, dihydrochalcones, thaumatin, monellin, and the like, and combinations thereof. In order to provide a longer lasting sweetness and flavor sensation, such artificial sweetener may be encapsulated or otherwise in a form to provide a controlled release of at least a portion of the artificial sweetener. Such techniques as wet granulation, wax granulation, spray drying, spray chilling, fluid bed coating, coacervation, and fiber extension may be used to achieve desired release characteristics. Usage level of artificial sweetener can vary greatly and will depend on such factors as potency of the sweetener, rate of release, desired sweetness of the product, level and type of flavor used, and cost considerations.

If a low calorie confectionery is desired, a low caloric bulking agent can be used. Examples of low caloric bulking agents include: Raftilose; Raftilin; Palatinose oligosaccharide; and Guar Gum Hydrolysate (SUN FIBER^{®}). However, other low calorie bulking agents may be used.

The flavorant or flavor used in the chewing gums may include any natural or synthetic oil and/or flavor as is commonly known in the art. Natural and artificial flavoring agents may be combined in any sensorially acceptable fashion. Flavor agents can be used in any suitable amount in the chewing gums. In an embodiment, the flavor ingredients comprise from about 0.1% to about 5 wt.% of the chewing gum.

Nonlimiting examples of suitable flavorants include natural and synthetic flavoring agents chosen from synthetic flavor oils and flavoring aromatics, and/or oils, oleo resins and extracts derived from plants, leaves, flowers, fruits, vegetables and so forth, and combinations thereof. Nonlimiting examples of flavor oils include spearmint oil, cinnamon oil, oil of wintergreen (methyl salicylate), peppermint oils, clove oil, bay oil, anise oil, eucalyptus oil, thyme oil, cedar leaf oil, oil of nutmeg, oil of sage, oil of bitter almonds, and cassia oil. Also nonlimiting examples of artificial, natural or synthetic fruit flavors include vanilla, cream, caramel, banana, cocoa, and citrus oil, including lemon, orange, grape, lime and grapefruit and fruit essences including apple, pear, peach, strawberry, raspberry, cherry, plum, pineapple, apricot and so forth. Flavors also may include any suitable pastes, powders and extracts of fruits and/or vegetables. Alternatively, flavors types may be salty, meaty, potato chip or crisp, and the like.

These flavorants may be used alone or in combination with or without a sensate such as, for example, a cooling or heating agent commonly known in the art. As used herein, the sensate/cooling excludes erythritol even though erythritol may provide a cooling effect. The flavorant or flavor may be encapsulated or non-encapsulated. Encapsulated flavorant may be used to increase or decrease the flavor release rate as is commonly known in the art.

Generally, sensates are compounds which cause a non-flavor sensory effect such as a cooling, heating, warming, tingling or numbing sensation to a consumer. Non-limiting examples of coolants include menthol, substituted p-menthane carboxamides, acyclic carboxamides, menthone glycerol ketals, menthyl lactate, menthyl succinate, 3-1-menthoxypropane-1,2 diol, and spearmint. Non-limiting examples of heating agents may include vanillyl alcohol n-butyl ether, vanillyl alcohol n-propyl ether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, iso-propyl alcohol, iso-amylalcohol, benzyl alcohol, chloroform, eugenol, cinnamon oil, cinnamic aldehyde and phosphate derivatives of same. Non-limiting examples of tingling agents may include Jambu Oleoresin or para cress (Spilanthes sp.) (the active ingredient being spiranthol), Japanese pepper extract (Zanthoxylum peperitum) having the active ingredient(s) known as Saanshool-I, Saanshool-II and Sanshoamide, black pepper extract (Piper nigrum) (having the active ingredients chavicine and piperine), echinacea extract, northern prickly ash extract, red pepper oleoresin, and effervescing agents, such as edible acids and bases.

Generally, ingredients known as "actives" include, but are not limited to, anti-oxidants, vitamins, minerals, stimulants, prebiotics, probiotics, enzymes, genetically modified organisms, nutritional supplements, yoghurt ingredients and whitening ingredients. Generally, medicaments include, but are not limited to, analgesics, antibiotics, antivirals, antihistamines, anti-inflammatories, decongestants, antacids, muscle relaxants, psychotherapeutic agents, insulin, diuretics, anesthetics, antitussives, anti-diabetic agents, bioengineered pharmaceuticals, nutraceuticals, traditional medicines and cardiovascular agents. A medicament may be used to treat conditions such as coughs, colds, motion sickness, allergies, fevers, pain, inflammation, sore throats, cold sores, sinus problems, diarrhea, diabetics, gastritis, depression, anxiety, hypertension, angina, and other maladies and symptoms.

Specific actives may include, by way of example and not limitation: b-glucan, isoflavones, omega-3 fatty acid, lignans, lycopene, allicin, glucosinolates, limonoids, fructose and a nondialyzable polymeric compound, polyphenols, catechins (e.g. epigallocatechin-3-gallate, epigallocatechin, epicatechin-3-gallate, epicatechin), phenolics, polyunsaturated fatty acids (PUFAs such as omega-3 (ω-3) fatty acids), soy protein, soy isolates, conjugated linoleic acid (CLA), caffeine, aspirin, nicotine, echinacea purpurea, ginseng, kola nut, capsicum, nettle, passion flower, St. Johns Wort, valerian, Ma Huang/guarana, kava kava and chamomile.

Vitamins include Vitamins A, B-complex (such as B-1, B-2, B-6 and B-12), C, D, E and K, niacin and acid vitamins such as pantothenic acid and folic acid and biotin. Minerals include compounds of calcium, iron, zinc, magnesium, iodine, copper, phosphorus, manganese, potassium, chromium, molybdenum, selenium, nickel, tin, silicon, vanadium and boron.

Specific medicaments include, by way of example and not limitation: aspirin, acetaminophen, ibuprofen, ketoprofen, cimetodine, ranitidine, famotidine, dramamine, omeprazole, dyclonine, chlorpheniramine maleate, pseudoephedrine, hydrochloride, dextromethorphan hydrobromide, benzocanine, sodium naproxen, hydroxycitric acid, chromium picolinate, phosphatidylserine, and insulin.

The confectionary product of this invention is a chewing gum. As used herein, the term "chewing gum" includes bubble gum and confectionery products containing chewing gum. Unless otherwise specified, all percentages used herein are weight percents. A chewing gum generally contains a water-insoluble gum base portion, a water-soluble bulking agent portion, and flavors. Usually a water-insoluble gum base portion is retained in the mouth throughout a chew by a consumer, while the water-soluble portion dissipates with a portion of the flavoring agents over a period of time during chewing.

A suitable water-insoluble gum base typically contains elastomers, resins, fats and oils, softeners, and inorganic fillers and may or may not include wax. A water-insoluble gum base typically constitutes approximately 5 to about 95 wt.%, of a chewing gum, more commonly the gum base comprises 10 to about 50 wt.% of the gum, and in some preferred embodiments, 20 to about 35 wt.%, of the chewing gum.

In an embodiment, a suitable chewing gum of the present disclosure contains about 20 to about 60 weight percent synthetic elastomer, 0 to about 30 wt.% natural elastomer, about 5 to about 55 wt.% elastomer plasticizer, about 4 to about 35 wt.% filler, about 5 to about 35 wt.% softener, and optional minor amounts (about one percent or less) of miscellaneous ingredients such as colorants, antioxidants, and the like.

Synthetic elastomers may include, but are not limited to, polyisobutylene with a GPC (gel permeation chromatography) weight average molecular weight of about 10,000 to about 95,000, isobutylene-isoprene copolymer (butyl rubber) and styrene butadiene copolymers (SBR's) having styrene-butadiene ratios of about 1:3 to about 3:1, polyvinyl acetate having a GPC weight average molecular weight of about 2,000 to about 90,000, polyisoprene, polyethylene, vinyl acetate-vinyl laurate copolymer having vinyl laurate content of about 5 to about 50 wt.% of the copolymer, and combinations thereof.

Preferred average GPC molecular weight ranges for polyisobutylene is 50,000 to 80,000, and for polyvinyl acetate is 10,000 to 65,000 with the higher molecular weight polyvinyl acetates typically used in bubble gum base. For vinyl acetate-vinyl laurate copolymer, a preferable vinyl laurate content is 10-45 percent.

Natural elastomers include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. Preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers include, but not limited to, natural rosin esters, often called ester gums, such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing the preferred elastomer plasticizers will also vary depending on the specific application, and on the type of elastomer which is used.

Fillers/texturizers include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners include FD&C-type dyes and lakes, fruit and vegetable extracts, titanium dioxide, and combinations thereof.

A suitable gum base portion also may contain materials which allow it to be suitably combined with other confectioneries. For example, the chewing gum can be chocolate/fat tolerant, acid friendly, tack-free, and the like.

In addition to a water-insoluble gum base portion, a typical chewing gum composition includes a water-soluble bulking agent portion and one or more flavoring agents. The water soluble portion typically includes bulk sweeteners, high intensity sweeteners, flavoring agents, softeners, emulsifiers, colors, sensates, acidulants, fillers, antioxidants, preservatives, actives, medicaments (as previously described) and other suitable components or processing aids or combinations thereof that provide desired attributes as known by the skilled artisan.

Softeners can be added to the chewing gum in order to optimize the chewability and mouth feel of the gum. The softeners, which are also known as plasticizers and plasticizing agents, generally constitute between approximately 0.5 to about 15 wt.% of the chewing gum. The softeners may include caprenin, glycerin, lecithin and combinations thereof. Aqueous sweetener solutions such as those containing sorbitol, hydrogenated starch hydrolysates, corn syrup, other polyols or sugars, such as tagatose, and combinations thereof, may also be used as softeners and binding agents in chewing gum.

A variety of processes for manufacturing chewing gum center are possible as is known in the art. For example, chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time, along with liquids and a portion of the bulking agent. Further portions of the bulking agent may then be added to the mixer. A flavoring agent is typically added with the final portion of the bulking agent. The entire mixing procedure typically takes from five to fifteen minutes, but longer mixing times may sometimes be required. Those skilled in the art will recognize that many variations of the above described procedures may be followed. Preferably, the erythritol bulking agent is added in the second, or final, portion of the bulking agent addition. Preferably, the filled beads are added with the second portion, or after the second portion of bulking agent is added to the batch.

The invention described herein is illustrated but not limited by the following Examples and Comparative Runs.

### Example 1 - not of the invention

Three chewing gums formulations containing varying combinations of erythritol granules and flavor beads were tested versus controls in a consumer sensory test. The three chewing gums are identified as Mint, Fruit #1, and Fruit #2.

The formulations of the Mint chewing gum are shown in Table 3. There was no acid component in any of the Mint samples. Acid was not part of the flavor profile of this product. Erythritol was present as coarse granules. The sorbitol and mannitol in sample #10 (control) was of standard grade (i.e. similar to "fine" erythritol granular size)

**Table 3: Mint Formulation**

| | Samples | | | | | | | | | |
|---|---|---|---|---|---|---|---|---|---|---|
| Ingredients (weight %) | #1 | #2 | #3 | #4 | #5 | #6 | #7 | #8 | #9 | #10 |
| Sorbitol | 59.7 | 38.7 | 43.7 | 58.9 | 42.9 | 37.9 | 58. | 37.1 | 42.1 | 46.3 |
| Mannitol | 0.15 | 0.15 | 0.15 | 0.15 | 0.15 | 0.15 | 0.15 | 0.15 | 0.15 | 4.0 |
| Erythritol | 0 | 21 | 16 | 0 | 16 | 21 | 0 | 21 | 16 | 0 |
| Hydrogenated Starch Hydrolysate | 0.5 | 0.5 | 0.5 | 0.5 | 0.5 | 0.5 | 0.5 | 0.5 | 0.5 | 0 |
| Gum Base | 30.0 | 30.0 | 30.0 | 30.0 | 30.0 | 30.0 | 30.0 | 30.0 | 30.0 | 32.0 |
| Filled Beads | 0.8 | 0.8 | 0.8 | 1.6 | 1.6 | 1.6 | 2.4 | 2.4 | 2.4 | 0 |
| Flavor, Colors & Sensates | 3.3 | 3.3 | 3.3 | 3.3 | 3.3 | 3.3 | 3.3 | 3.3 | 3.3 | 3.2 |
| High Intensity Sweeteners | 1.15 | 1.15 | 1.15 | 1.15 | 1.15 | 1.15 | 1.15 | 1.15 | 1.15 | 1.8 |
| Acids | 0 | 0 | 0 | 0 | 0 | 0 | 0 | 0 | 0 | 0 |
| Oils/glycerin/lecithin | 4.1 | 4.1 | 4.1 | 4.1 | 4.1 | 4.1 | 4.1 | 4.1 | 4.1 | 11.6 |
| Water | 0.3 | 0.3 | 0.3 | 0.3 | 0.3 | 0.3 | 0.3 | 0.3 | 0.3 | 1.1 |
| Erthritol Granulation | Coarse | Coarse | Coarse | Coarse | Coarse | Coarse | Coarse | Coarse | Coarse | |
| Samples #1 to #10 do not form part of the invention. | | | | | | | | | | |

The formulations of Fruit #1 chewing gum samples are shown in Table 4.. Erythritol was present as coarse granules. The sorbitol and mannitol in sample #10 (control) was of standard grade (i.e. similar to "fine" erythritol granular size).

**Table 4: Fruit #1 Gum Formulations**

| | Samples | | | | | | | | | |
|---|---|---|---|---|---|---|---|---|---|---|
| Ingredients (weight %) | #1 | #2 | #3 | #4 | #5 | #6 | #7 | #8 | #9 | #10 |
| Sorbitol | 50.2 | 37.9 | 33.6 | 49.4 | 37.1 | 32.8 | 48.6 | 36.3 | 32.0 | 51.5 |
| Mannitol | 0.29 | 0.17 | 0.15 | 0.29 | 0.17 | 0.15 | .29 | 0.17 | 0.15 | 0.29 |
| Erythritol | 0 | 16 | 21 | 0 | 16 | 21 | 0 | 16 | 21 | 0 |
| Hydrogenated Starch Hydrolysate | 1.04 | 0.63 | 0.55 | 1.04 | 0.63 | 0.55 | 1.04 | 0.63 | 0.55 | 1.04 |
| Gum Base | 32 | 32 | 32 | 32 | 32 | 32 | 32 | 32 | 32 | 31 |
| Filled Beads | 0.8 | 0.8 | 0.8 | 1.6 | 1.6 | 1.6 | 2.4 | 2.4 | 2.4 | 0 |
| Flavors, Colors & Sensates | 2.44 | 2.44 | 2.44 | 2.44 | 2.44 | 2.44 | 2.44 | 2.44 | 2.44 | 3.46 |
| Acid* | 3.00 | 3.00 | 3.00 | 3.00 | 3.00 | 3.00 | 3.00 | 3.00 | 3.00 | 1.00 |
| High Intensity Sweeteners | 1.91 | 1.91 | 1.91 | 1.91 | 1.91 | 1.91 | 1.91 | 1.91 | 1.91 | 1.78 |
| Oils/glycerin/lecithin | 7.74 | 4.82 | 4.23 | 7.74 | 4.82 | 4.23 | 7.74 | 4.82 | 4.23 | 7.40 |
| Water | 0.57 | 0.35 | 0.30 | 0.57 | 0.35 | 0.30 | 0.57 | 0.35 | 0.30 | 2.54 |
| Erythritol Granulation | Coarse | Coarse | Coarse | Coarse | Coarse | Coarse | Coarse | Coarse | Coarse | - |
| * Acids include malic and citric acid. | | | | | | | | | | |
| Samples #1 to #10 do not form part of the invention. | | | | | | | | | | |

The formulations of the Fruit # 2 chewing gum samples are shown in Table 5. Erythritol was present as coarse granules. The sorbitol and mannitol in sample #10 (control) was of standard grade (i.e. similar to "fine" erythritol granular size)

**Table 5: Fruit # 2 Gum Formulations**

| | Samples | | | | | | | | | |
|---|---|---|---|---|---|---|---|---|---|---|
| Ingredients (weight %) | #1 | #2 | #3 | #4 | #5 | #6 | #7 | #8 | #9 | #10 |
| Sorbitol | 49.2 | 36.9 | 32.6 | 48.4 | 36.1 | 31.8 | 47.6 | 35.3 | 31.0 | 51.5 |
| Mannitol | 0.3 | 0.2 | 0.15 | 0.3 | 0.2 | 0.15 | 0.3 | 0.2 | 0.15 | 0.3 |
| Erythritol | 0 | 16 | 21 | 0 | 16 | 21 | 0 | 16 | 21 | 0 |
| Hydrogenated Starch Hydrolysate | 1.0 | 0.6 | 0.55 | 1.0 | 0.6 | 0.55 | 1.0 | 0.6 | 0.55 | 1.0 |
| Gum Base | 32 | 32 | 32 | 32 | 32 | 32 | 32 | 32 | 32 | 31 |
| Filled Beads | 0.8 | 0.8 | 0.8 | 1.6 | 1.6 | 1.6 | 2.4 | 2.4 | 2.4 | 0 |
| Flavor, Color & Sensates | 3.1 | 3.1 | 3.1 | 3.1 | 3.1 | 3.1 | 3.1 | 3.1 | 3.1 | 3.5 |
| Acid* | 3 | 3 | 3 | 3 | 3 | 3 | 3 | 3 | 3 | 1 |
| High Intensity Sweeteners | 1.9 | 1.9 | 1.9 | 1.9 | 1.9 | 1.9 | 1.9 | 1.9 | 1.9 | 1.8 |
| Oils/glycerin/lecithin | 8.1 | 5.1 | 4.6 | 8.1 | 5.1 | 4.6 | 8.1 | 5.1 | 4.6 | 7.4 |
| Water | 0.6 | 0.4 | 0.3 | 0.6 | 0.4 | 0.3 | 0.6 | 0.35 | 0.3 | 2.5 |
| Erythritol Granulation | - | Coarse | Coarse | | Coarse | Coarse | | Coarse | Coarse | - |
| Samples #1 to #10 do not form part of the invention. | | | | | | | | | | |
| * Acids include malic and citric acid | | | | | | | | | | |

The consumer sensory test used to evaluate theses samples was a sequential monadic complete block design, in which half of the test consumers were male and half were female, and all were 18 to 49 years old. Sample size was N=102 - 104 (depending on test cell). Three cells were run, one flavor per cell. All products were seen by all consumers one after another. Serving order was rotated and balanced. All consumers were asked the question "how effective was this gum in giving your mouth a hydrating sensation?" The figures show the percentage of the overall consumers who answered the question with at least a 1) extremely effective or 2) very effective response. Capital letters indicate significant difference between samples at a 95% confidence. Lower case letters indicate significant difference between samples at a 90% confidence.

Tables 6 - 8 include results of consumer sensory data for nine samples of chewing gums of each flavor having combinations of erythritol amounts of 0, 16 or 21% by weight of the chewing gum and filled bead amounts of 0.8, 1.6 or 2.4% by weight of the chewing gum.

Table 6 illustrates the consumer sensory test data for the Mint chewing gum samples in Table 3. The data show a peak effective amount of hydration sensation for the Mint at an erythritol amount of 21 wt.% and a filled bead amount of 1.6 wt%.

**Table 6 Mint Consumer Sensory Test Data**

| Sample # | Identifier | Bead Level | Erythritol Level | Hydration | Significant Difference |
|---|---|---|---|---|---|
| #6 | C | 1.6 | 21 | 69 | bdefGHJK |
| #3 | A | 0.8 | 16 | 66 | bGhJK |
| #9 | D | 2.4 | 16 | 62 | GhJ |
| #7 | F | 2.4 | 0 | 62 | GhJ |
| #2 | E | 0.8 | 21 | 62 | GhJ |
| #4 | B | 1.6 | 0 | 59 | gJ |
| #5 | K | 1.6 | 16 | 57 | gj |
| #8 | H | 2.4 | 21 | 56 | j |
| #1 | G | 0.8 | 0 | 50 | |
| #10 | J | 0.0 | 0 | 47 | |

Table 7 illustrates consumer sensory test data for the Fruit #1 chewing gum samples in Table 4. The data show a peak effective amount of hydration sensation for Fruit #1 occurred at an erythritol amount of 21 wt.% and a filled bead amount of 1.6 wt.%.

**Table 7: Fruit #1 Consumer Sensory Test Data**

| Sample # | Identifier | Bead Level | Erythritol Level | Hydration | Significant Difference |
|---|---|---|---|---|---|
| #6 | E | 1.6 | 21 | 66 | aBcdFHJK |
| #2 | G | 0.8 | 16 | 62 | bcfHJk |
| #3 | D | 0.8 | 21 | 61 | bfHJk |
| #8 | A | 2.4 | 16 | 58 | fhJ |
| #5 | C | 1.6 | 16 | 56 | hj |
| #1 | K | 0.8 | 0 | 55 | hj |
| #9 | B | 2.4 | 21 | 54 | j |
| #7 | F | 2.4 | 0 | 51 | |
| #10 | H | 0 | 0 | 48 | |
| #4 | J | 1.6 | 0 | 46 | |

Table 8 illustrates consumer sensory test data for Fruit #2 chewing gum samples in Table 5. The data shows that the peak effective amount of hydration sensation for the Fruit #2 occurred at an erythritol amount of 0wt.% and 21wt.%, each at a corresponding filled bead amount of 1.6 wt.%.

**Table 8: Fruit #2 Consumer Sensory Test Data**

| Sample # | Identifier | Bead Level | Erythritol Level | Hydration | Significant Difference |
|---|---|---|---|---|---|
| #4 | G | 1.6 | 0 | 61 | abj |
| #6 | C | 1.6 | 21 | 60 | bj |
| #1 | H | 0.8 | 0 | 60 | bj |
| #2 | D | 0.8 | 16 | 59 | bj |
| #9 | E | 2.4 | 21 | 58 | bj |
| #8 | K | 2.4 | 16 | 58 | bj |
| #10 | F | 0 | 0 | 56 | |
| #5 | A | 1.6 | 16 | 55 | |
| #3 | B | 0.8 | 21 | 51 | |
| #7 | J | 2.4 | 0 | 51 | |

Generally, the filled beads at about 1.6 wt.% and the erythritol at about 21 wt.% were found to be the best options for the three formulations in terms of creating a perception of hydration.

### Example 2

This study investigated whether consumers perceive erythritol gum having 1) 100% fine erythritol and 2) 50%/50% coarse/fine erythritol as mouth-watering. To do this, the consumer mouth-watering sensation (e.g. sensation of hydration) of a erythritol gum (100% fine erythritol & 50/50 coarse/fine erythritol) (the "experimental gum") was compared to a sorbitol/mannitol control (mint flavored) (the "control gum"). The formulations of these gums with erythritol and the control are shown in Table 9. There was no acid in any of these samples.

**Table 9: Gum With Erythritol Formulations**

| | Sample | | |
|---|---|---|---|
| Ingredients (weight %) | #1 | #2 | #3 |
| Sorbitol | 0 | 0 | 48.33 |
| Mannitol | 0 | 0 | 4.63 |
| Erythritol | 56.28 | 57.28 | 0 |
| Erythritol Type | Fine | 50/50 fine/coarse | N/A |
| Gum Base | 30.00 | 30.00 | 30.00 |
| Calcium Carbonate | 3.9 | 3.9 | 0 |
| Flavor, Colors & Sensates | 2.95 | 2.95 | 2.86 |
| High Intensity Sweeteners | 4.08 | 4.08 | 4.08 |
| Acids | 0 | 0 | 0 |
| Oils/glycerin/lecithin | 3.30 | 2.30 | 7.60 |
| Water | 0 | 0 | 2.50 |
| **Total** | **100** | **100** | **100** |
| Samples #1 and #3 do not form part of the invention. | | | |

The consumer sensory test was a sequential monadic complete block design. N=92. Each consumer evaluated two pairs of products (control vs. fine erythritol experimental and control vs. 50/50 coarse/fine erythritol experimental). Serving order was rotated and balanced across the pairs and control vs. experimental.

Consumers were asked to choose which sample of the two is "more mouth-watering" or "no difference in mouth-watering". Open-ended responses were collected during a 4-minute chew as well as after consumers had evaluated each pair of products.

The crystal-like texture of coarse erythritol in gum was noticeable to consumers. Consumers were not specifically told to expect crystal-like texture prior to tasting the samples. The core statement prior product evaluation was "Today you will taste several mouth-watering chewing gums." A majority (55 of 92) consumers mentioned the crystal/sand like texture of coarse/fine erythritol gum in their open-ended responses: 22 of them liked it, 17 of them disliked it, and 16 of them noted it but did not specify likes/dislikes.

Significantly more consumers perceived the experimental gum being more mouth-watering (i.e. having increased sensation of hydration) than the control gum (at a significant difference at 90% confidence level). Both the fine erythritol gum and coarse/fine erythritol gum were perceived to be more mouth-watering than the control. All polyols in control sample (i.e., sorbitol & mannitol) were substituted using fine erythritol or 50/50 coarse/fine erythritol.

Fine erythritol containing gum (at a significant difference at 95% confidence level): 54 of 92 consumers selected the fine erythritol containing gum as the more mouth watering sample than Control. About a third (30 of 92) of consumers selected the control as the more mouth watering sample than fine erythritol containing gum. Eight of 92 consumers thought there was no difference in mouth watering between control and fine erythritol containing gum.

Coarse/fine erythritol containing gum (at a significant difference at 95% confidence level): 58 of 92 consumers selected coarse/fine erythritol containing gum as the more mouth watering sample over the control. About a third of the consumers (30 of 92) selected control as the more mouth watering sample over coarse/fine erythritol containing gum. Four of 92 consumers thought there was no difference in mouth watering between control and coarse/fine erythritol containing gum.

### Example 3 - not of the invention

Additional formulations of fruit flavored chewing gum containing coarse and fine erythritol are shown in Table 10. Two samples of chewing gum containing 20% erythritol were compared (by 12 panelists) against a sample containing no erythritol. Samples #2 and #3 were perceived as more mouthwatering and as having more flavor intensity than sample # 1 (control). Test results are in Table 11. The sensory test was a sequential monadic design, with samples evaluated blind and in rotated order. Participants rated samples on a 7 point scale (7 being extremely effective; 5 being moderately effective) as to effectiveness of giving a mouthwatering sensation and on a 7 point scale (7 being extremely fruity; 5 being moderately fruity) as to amount of fruit flavor intensity.

**Table 10: Gum Formulas with 20% Erythritol**

| | Sample | | |
|---|---|---|---|
| Ingredients (weight %) | #1 | #2 | #3 |
| Sorbitol | 53.0 | 33.0 | 33.0 |
| Eythritol Fine | 0.0 | 20.0 | 0.0 |
| Erythritol Coarse | 0.0 | 0.0 | 20.0 |
| Samples #1 to #3 do not form part of the invention. | | | |

**Table 11: Sensory Results**

| | Sample | | |
|---|---|---|---|
| | #1 | #2 | #3 |
| Mouthwatering | 5 | 5.42 | 5.17 |
| Flavor Intensity | 5.17 | 5.33 | 5.33 |

### Example 4 - not of the invention

Additional formulations of fruit flavored chewing gum containing coarse and fine erythritol are shown in Table 12. Product #1 and #2 were perceived to provide a mouthwatering effect. Product #2 additionally contained a sensate, which was indicated by the supplier to create salivation.

**Table 12: Gum with Erythritol Formulations**

| | Sample | |
|---|---|---|
| Ingredients (weight %) | #1 | #2 |
| Sorbitol | 33.6 | 30.4 |
| Erythritol (form) | 20 (coarse) | 20 (fine) |
| Gum Base | 30 | 27 |
| Flavors and Colors | 2.8 | 3.5 |
| Acids* | 1.7 | 1.5 |
| High Intensity Sweeteners | 1.8 | 0.5 |
| Sensate | 0 | 0.3 |
| Oils/lecithin/glycerol | 0 | 0.3 |
| Polyol Syrup | 10 | 16.7 |
| Total | 100 | 100 |
| * Acids include citric, malic, fumaric acids. | | |
| Samples #1 and #2 do not form part of the invention. | | |

### Example 5 - not of the invention

Additional formulations of the Fruit #1 gum are shown in Table13 and for Fruit #2 in Table 14. The ingredients can be adjusted to soften or firm gum texture without needing to reduce erythritol content.

**Table 13: Alternative Fruit #1 Gum Formulations**

| | Sample | | | |
|---|---|---|---|---|
| Ingredients (weight %) | #1 | #2 | #3 | #4 |
| Sorbitol | 33.2 | 36.4 | 37.9 | 38.6 |
| Mannitol | 0.2 | 0.1 | 0.1 | 0.1 |
| Xylitol | 0.0 | 0.5 | 0.0 | 0.0 |
| Erythritol | 21.0 | 21.0 | 21.0 | 21.0 |
| Hydrogenated Starch Hydrolysate | 0.6 | 0.4 | 0.4 | 0.4 |
| Gum Base | 32.0 | 30.0 | 28.8 | 28.1 |
| Flavor Beads | 1.6 | 1.6 | 1.6 | 1.6 |
| Flavor, Color & Sensates | 2.4 | 2.1 | 2.2 | 2.2 |
| Acid | 3.5 | 3.5 | 3.5 | 3.5 |
| High Intensity Sweeteners | 1.0 | 1.0 | 1.0 | 1.0 |
| Oils/glycerin/lecithin | 4.2 | 3.2 | 3.3 | 3.3 |
| Water | 0.3 | 0.2 | 0.2 | 0.2 |

**Table 14: Alternative Fruit #2 Formulations**

| | Product | | | |
|---|---|---|---|---|
| Ingredients (weight %) | #1 | #2 | #3 | #4 |
| Sorbitol | 36.1 | 36.9 | 37.2 | 32.6 |
| Mannitol | 0.2 | 0.1 | 0.1 | 0.2 |
| Xylitol | 0.0 | 0.5 | 0.0 | 0.0 |
| Erythritol | 21.0 | 21.0 | 21.0 | 21.0 |
| Hydrogenated Starch Hydrolysate | 0.6 | 0.4 | 0.4 | 0.6 |
| Gum Base | 28.8 | 29.0 | 28.8 | 32.0 |
| Flavor Beads | 1.6 | 1.6 | 1.6 | 1.6 |
| Flavor, Color & Sensates | 2.6 | 2.6 | 2.6 | 2.9 |
| Acid | 3.5 | 3.6 | 3.6 | 3.5 |
| High Intensity Sweeteners | 1.0 | 1.0 | 1.0 | 1.0 |
| Oils/glycerin/lecithin | 4.3 | 3.1 | 3.5 | 4.3 |
| Water | 0.3 | 0.2 | 0.2 | 0.3 |

### Example 6

Additional formulations of the gum formulations are shown in Table 15 and Table 16. Table 15 includes gum formulations containing acid and sorbitol, erythritol, or xylitol. Table 16 includes gum formulations containing only a very low amount of acid (added for fruit flavor) and sorbitol, erythritol, or xylitol. Table 17 includes sensory test results for the samples in Table 15 and Table 16.

**Table 15: Fruit Gum Formulations With Acid**

| | Sample | | | | |
|---|---|---|---|---|---|
| | #1 | #2 | #3 | #4 | #5 |
| Erythritol Coarse | 59.0 | 29.5 | 0.0 | 0.0 | 0.0 |
| Erythritol Fine | 0.0 | 29.5 | 58.0 | 0.0 | 0.0 |
| Xylitol | 0.0 | 0.0 | 0.0 | 58.0 | 0.0 |
| Sorbitol | 0.0 | 0.0 | 0.0 | 0.0 | 53.0 |
| Gum Base | 32.0 | 32.0 | 32.0 | 32.0 | 32.0 |
| Oli/glycerin/lecithin | 1.7 | 1.7 | 2.7 | 2.7 | 7.7 |
| Flavors, Colors & Sensates | 2.4 | 2.4 | 2.4 | 2.4 | 2.4 |
| Acids | 3.8 | 3.8 | 3.8 | 3.8 | 3.8 |
| High Intensity Sweeteners | 1.1 | 1.1 | 1.1 | 1.1 | 1.1 |
| Calcium Carbonate | 0.0 | 0.0 | 0.0 | 0.0 | 0.0 |
| Samples #1, #3, #4 and #5 do not form part of the invention. | | | | | |

**Table 16: Fruit Gum Formulations With Only Flavoring Acid**

| | Sample | | | | |
|---|---|---|---|---|---|
| | #6 | #7 | #8 | #9 | #10 |
| Erythritol Coarse | 59.0 | 29.5 | 0.0 | 0.0 | 0.0 |
| Erythritol Fine | 0.0 | 29.5 | 58.0 | 0.0 | 0.0 |
| Xylitol | 0.0 | 0.0 | 0.0 | 58.0 | 0.0 |
| Sorbitol | 0.0 | 0.0 | 0.0 | 0.0 | 53.0 |
| Gum Base | 32.0 | 32.0 | 32.0 | 32.0 | 32.0 |
| Oli/glycerin/lecithin | 1.7 | 1.7 | 2.7 | 2.7 | 7.7 |
| Flavors, Colors & Sensates | 2.4 | 2.4 | 2.4 | 2.4 | 2.4 |
| Acids | 0.8 | 0.8 | 0.8 | 0.8 | 0.8 |
| High Intensity Sweeteners | 1.1 | 1.1 | 1.1 | 1.1 | 1.1 |
| Calcium Carbonate | 3.0 | 3.0 | 3.0 | 3.0 | 3.0 |
| Samples #6, #8 ,#9 and #10 do not form part of the invention. | | | | | |

**Table 17: Sensory Results for Fruit Gum Formulations**

| | Test Results | | | | |
|---|---|---|---|---|---|
| Sample Number | Identifier (for Statistical Differences) | Effectiveness of Hydration | | Strength of Fruitiness | |
| 1 | A | 7.18 | BDEFGHJK | 6.70 | bDeFGHJK |
| 2 | B | 6.77 | FgJK | 6.33 | FGhJK |
| 3 | C | 6.90 | deFGhJK | 6.72 | bDeFGHJK |
| 4 | D | 6.59 | JK | 6.29 | FGhJK |
| 5 | E | 6.56 | JK | 6.38 | FGHJK |
| 6 | F | 6.33 | K | 5.84 | K |
| 7 | G | 6.41 | K | 5.85 | K |
| 8 | H | 6.52 | JK | 5.96 | Jk |
| 9 | I | 6.13 | K | 5.60 | k |
| 10 | J | 5.37 | | 4.77 | |

The sensory test was a sequential monadic design, with samples evaluated blind and in rotated order. N = 92. Participants rated samples on a 9 point scale (9 being extremely effective; 5 being moderately effective) as to effectiveness of giving a mouthwatering sensation and on a 9 point scale (9 being extremely fruity; 5 being moderately fruity) as to amount of fruit flavor intensity.

The sensory test data show that the mouth watering/hydration sensation and fruitiness were driven by both polyols and acids. Erythritol chewing gums were significantly higher than the sorbitol containing (control) chewing gum in mouth watering and fruitiness when no acid was present. Chewing gums with fine erythritol had higher mouth watering and fruitiness scores than chewing gums with xylitol when no acid was present. Chewing gums with erythritol had significantly stronger mouth watering scores than xylitol and sorbitol gums when acid was present.

## Claims

1. A chewing gum comprising a gum base, bulking agent and flavour component in which the bulking agent comprises a blend of granules consisting of erythritol, said blend comprising 50 to 99 wt% of coarse granules which are retained on a sieve of 250 microns,
said granules of erythritol forming up to 80 wt% of the chewing gum and wherein the chewing gum comprises at least 20 wt% of the coarse erythritol granules.

2. A chewing gum of claim 1, in which at least 75% of erythritol granules contained in the product are retained on a 250 micron Sieve.

3. A chewing gum of claim 2 in which the erythritol granules comprise up to 90 wt% of the bulking agent in the product.

4. A chewing gum of claim 2 or 3 further comprising 0.1 to 5 wt% food grade acid selected from citric, malic, lactic, ascorbic, tartaric, adipic, acetic, and fumaric acid.

5. A chewing gum of claim 2 or 3 further comprising 0.1 to 5 wt% filled beads.

6. A method to provide a sensation of hydration to a consumer comprising consuming a chewing gum as claimed in claims 1 to 5.

## Patentansprüche

1. Kaugummi, umfassend eine Gummibasis, einen Füllstoff und eine Geschmackskomponente, wobei der Füllstoff eine Granulatmischung umfasst, die aus Erythrit besteht, wobei die Mischung 50 bis 99 Gew.-% grobes Granulat umfasst, das auf einem 250-Mikron-Sieb zurückgehalten wird,
wobei das Erythrit-Granulat bis zu 80 Gew.-% des Kaugummis bildet
und der Kaugummi mindestens 20 Gew. - % des groben Erythrit-Granulats umfasst.

2. Kaugummi nach Anspruch 1, wobei mindestens 75 % des Erythrit-Granulats, das im Produkt enthalten ist, in einem 250-Mikron-Sieb zurückgehalten wird.

3. Kaugummi nach Anspruch 2, wobei das Erythrit-Granulat bis zu 90 Gew.-% des Füllstoffs im Produkt umfasst.

4. Kaugummi nach Anspruch 2 oder 3, weiter umfassend 0,1 bis 5 Gew.-% Säure in Lebensmittelqualitat, ausgewählt aus Zitronen-, Apfel-, Milch-, Ascorbin-, Wein-, Adipin-, Essig- und Fumarsäure.

5. Kaugummi nach Anspruch 2 oder 3, weiter umfassend 0,1 bis 5 Gew.-% gefüllte Perlen.

6. Verfahren, um einem Konsumenten ein Feuchtigkeitsgefühl zu vermitteln, umfassend Konsumieren eines Kaugummis nach Ansprüchen 1 bis 5.

## Revendications

1. Gomme à mâcher comprenant une base de gomme, un agent gonflant et un composant aromatique, dans laquelle l'agent gonflant comprend un mélange de granulés constitués d'érythritol, ledit mélange comprenant 50 à 99 % en poids de granulés grossiers qui sont retenus sur un tamis de 250 micromètres,
lesdits granulés d'érythritol formant jusqu'à 80 % en poids de la gomme à mâcher, et dans laquelle la gomme à mâcher comprend au moins 20 % en poids des granulés d'érythritol grossiers.

2. Gomme à mâcher selon la revendication 1, dans laquelle au moins 75 % des granulés d'érythritol contenus dans le produit sont retenus sur un tamis de 250 micromètres.

3. Gomme à mâcher selon la revendication 2, dans laquelle les granulés d'érythritol constituent jusqu'à 90 % en poids de l'agent gonflant dans le produit.

4. Gomme à mâcher selon la revendication 2 ou 3, comprenant en outre 0,1 à 5 % en poids d'acide de qualité alimentaire choisi parmi les acides citrique, malique, lactique, ascorbique, tartrique, adipique, acétique et fumarique.

5. Gomme à mâcher selon la revendication 2 ou 3, comprenant en outre 0,1 à 5 % en poids de billes remplies.

6. Procédé pour donner une sensation d'hydratation à un consommateur, comprenant la consommation d'une gomme à mâcher selon les revendications 1 à 5.
